# EUROPÄISCHE PATENTSCHRIFT

(11) **EP 2 008 846 B1**
(45) Veröffentlichungstag und Bekanntmachung des Hinweises auf die Patenterteilung: **07.07.2010**
(21) Anmeldenummer: 07019846.0
(22) Anmeldetag: 10.10.2007
(51) Int. Cl.: B60J 5/06

(54) **Schiebetüre für ein Fahrzeug**
Sliding door for a vehicle
Porte coulissante pour véhicule

(30) Priorität: 28.06.2007 DE 102007029816; 27.07.2007 DE 102007035231
(43) Veröffentlichungstag der Anmeldung: 31.12.2008
(73) Patentinhaber: DURA Automotive Body and Glass Systems GmbH, 58840 Plettenberg (DE)
(72) Erfinder: Heuel, Gerhard, 57462 Olpe (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- DE-A1- 19 735 181
- DE-A1-102004 039 885
- DE-C2- 4 444 041
- JP-A- 9 277 833

## Beschreibung

Die Erfindung betrifft eine Schiebetüre für ein Fahrzeug, insbesondere für ein Kraftfahrzeug.

Aus der EP 1 721 768 A1 ist eine Schiebetüre für Kraftfahrzeuge bekannt, die an ihrer Innenseite eine Führungsschiene aufweist. An der Führungsschiene ist ein Gleitschlitten längsverschieblich gelagert. Ferner umfaßt die Schiebetüre einen Scharnierbügel, der an dem Gleitschlitten und an einem Karosserieflansch oder einem sonstigen Karosserierteil drehbar gelagert ist.

Aus der DE 10 2004 039 885 A1, der DE 4 444 041 C2 und der EP 1 745 958 A2 sind weitere Schiebetüren bekannt.

Aufgabe der Erfindung ist es, die vorbekannte Schiebetüre zu verbessern.

Erfindungsgemäß wird diese Aufgabe durch die kennzeichnenden Merkmale des Anspruchs 1 gelöst. Die Schiebetüre umfaßt einen Zwischenhebel, der an dem Gleitschlitten drehbar gelagert ist, einen Steuerhebel, der an dem Zwischenhebel und an einem oder dem Karosserieflansch oder sonstigen Karosserieteil drehbar gelagert ist, und eine Antriebstange, die an dem Steuerhebel drehbar gelagert ist. Die Antriebstange kann mit dem Steuerhebel unmittelbar oder mittelbar verbunden sein. Die Antriebstange kann den Steuerhebel oder ein damit verbundenes Teil antreiben. Es ist allerdings auch möglich, daß die Antriebstange einen anderen Bestandteil des Mehrgelenks antreibt, das aus dem Scharnierbügel, dem Steuerhebel, dem Karosserieflansch oder einem sonstigen Karosserieteil und dem Zwischenhebel besteht. Ferner ist es möglich, daß die Antriebstange mit dem Steuerhebel unmittelbar oder mittelbar verbunden ist und daß der Scharnierbügel oder ein anderes Teil des erwähnten Mehrgelenks angetrieben wird.

Vorteilhafte Weiterbildungen sind in den Unteransprüchen beschrieben.

Vorzugsweise ist die Schiebetüre an dem dem Scharnierbügel abgewandten Ende drehbar und längsverschieblich gelagert. Zu diesem Zweck kann an dem Fahrzeug ein Scharnierbolzen für eine Scharnierkulisse an der Schiebetüre vorgesehen sein. Der Scharnierbolzen befindet sich vorzugsweise in dem dem Scharnierbügel abgewandten Bereich der Türöffnung. Die Scharnierkulisse, die vorzugsweise U-förmig ist, ist vorzugsweise an dem dem Scharnierbügel in der geschlossenen Stellung der Schiebetüre abgewandten Ende der Schiebetüre vorgesehen. Durch das Zusammenwirken des Scharnierbolzens und der Scharnierkulisse ist die Schiebetüre drehbar und längsverschieblich gelagert. Die Anordnung kann allerdings auch umgekehrt getroffen sein, also in der Weise, daß der Scharnierbolzen an der Schiebetüre und die Scharnierkulisse an dem Fahrzeug vorgesehen sind.

Nach einer weiteren vorteilhaften Weiterbildung ist die Antriebstange an der Führungsschiene drehbar gelagert. Die Antriebstange kann allerdings auch an einem anderen Teil der Schiebetüre drehbar gelagert sein.

Vorteilhaft ist es, wenn der Steuerhebel einen Hebelarm aufweist, an dem die Antriebstange drehbar gelagert ist.

Eine weitere vorteilhafte Weiterbildung ist dadurch gekennzeichnet, daß an dem Zwischenhebel ein Führungsstift vorgesehen ist, der in einer an der Schiebetüre vorgesehenen Führungsbahn geführt ist.

Ein Ausführungsbeispiel der Erfindung wird nachstehend anhand der beigefügten Zeichnung im einzelnen erläutert. In der Zeichnung zeigt
- Fig. 1a: eine Ausführungsform einer Schiebetüre für ein Kraftfahrzeug in der geschlossenen Stellung in einer schematischen Ansicht von oben,
- Fig. 1b: die Schiebetüre gemäß Fig. 1 a in der vollständig geöffneten Stellung,
- Fig. 2a-i: die Öffnungsbewegung der Schiebetüre gemäß Fig. 1 von der geschlossenen Stellung in die vollständig geöffnete Stellung in einer schematischen Ansicht von oben in einem vergrößerten Maßstab,
- Fig. 3a-i: Teile der Darstellungen der Fig. 2a-i in einem noch weiter vergrößerten Maßstab,
- Fig. 4a-c: die Schiebetüre gemäß Fig. 1 - 3 in der geschlossenen Stellung, in einer Zwischenstellung und in der vollständig geöffneten Stellung, jeweils in einer perspektivischen Ansicht,
- Fig. 5a-c: die Schiebetüre gemäß Fig. 4a-c, jeweils in einer Ansicht von oben, und
- Fig. 6a-c: die Schiebetüre gemäß Fig. 4a-c und 5a-c, jeweils in einer Seitenansicht.

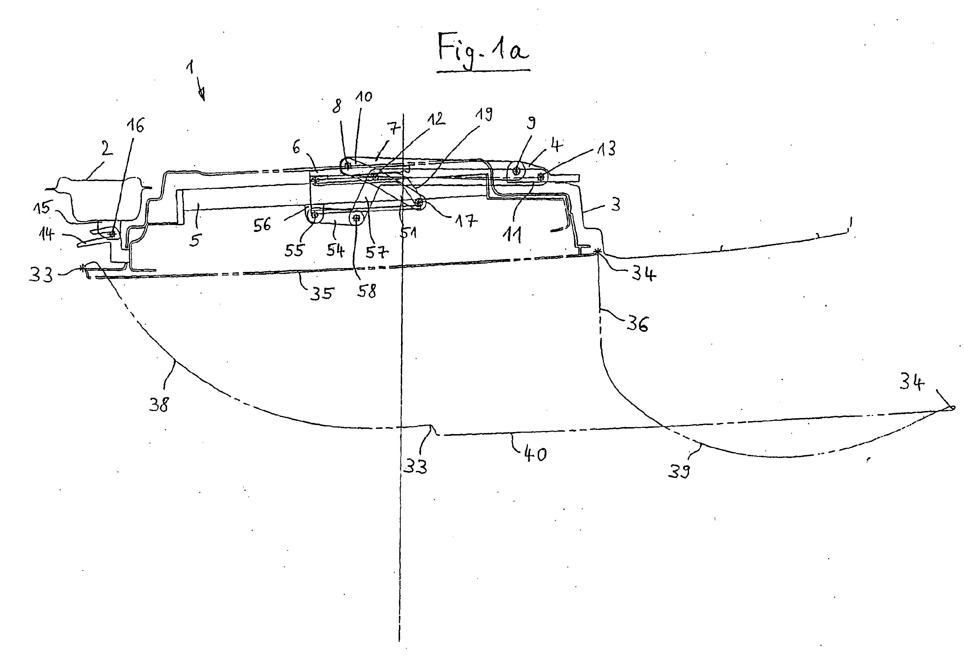

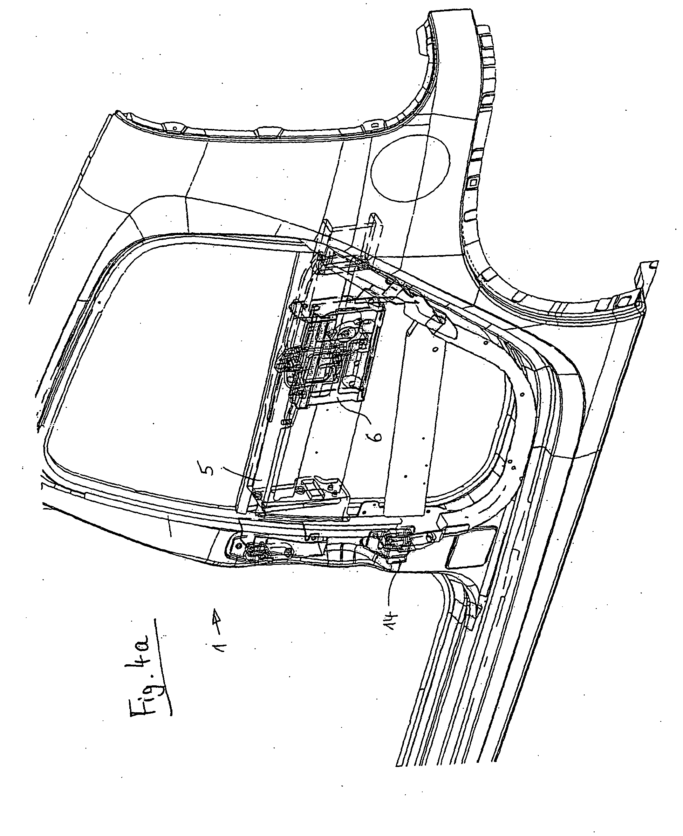

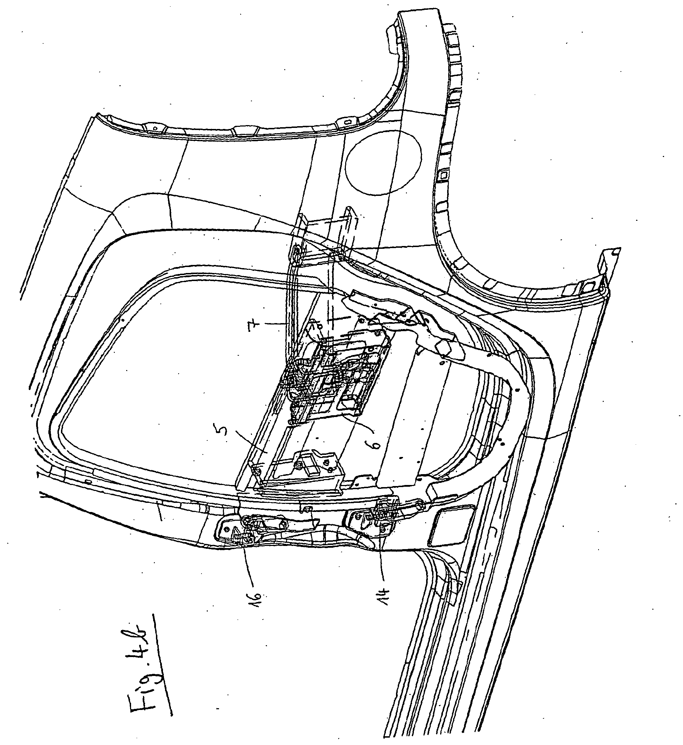

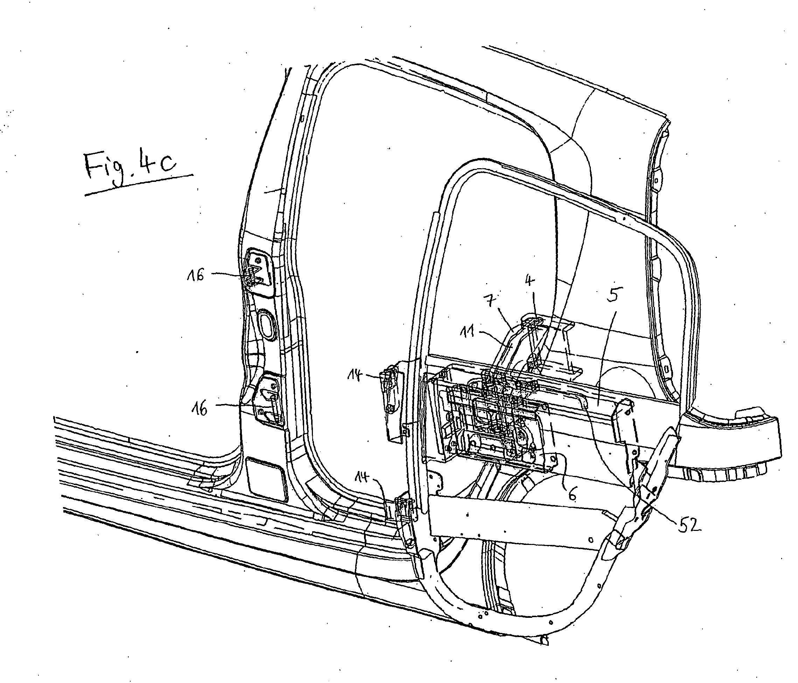

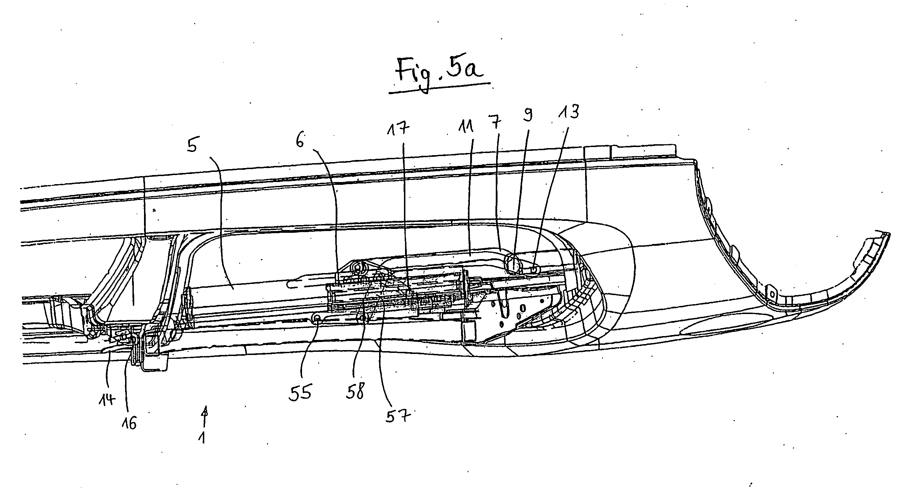

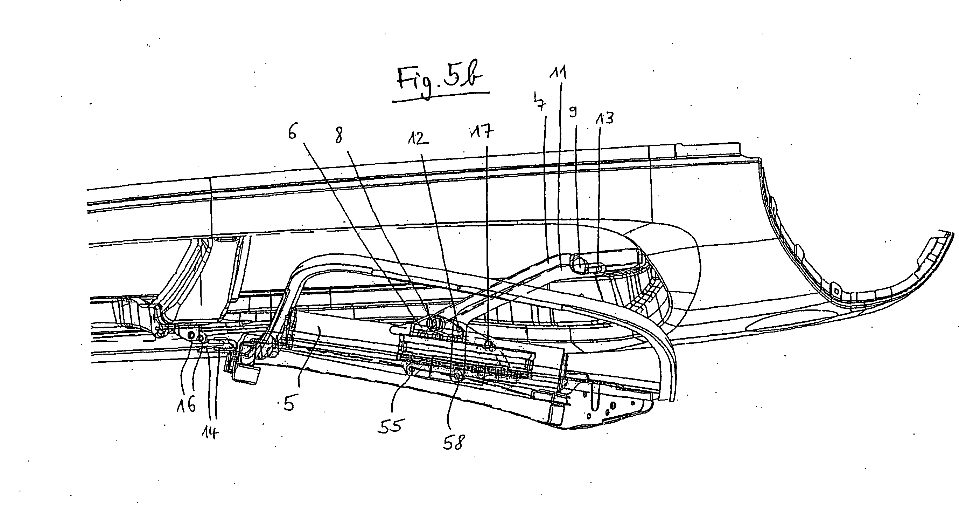

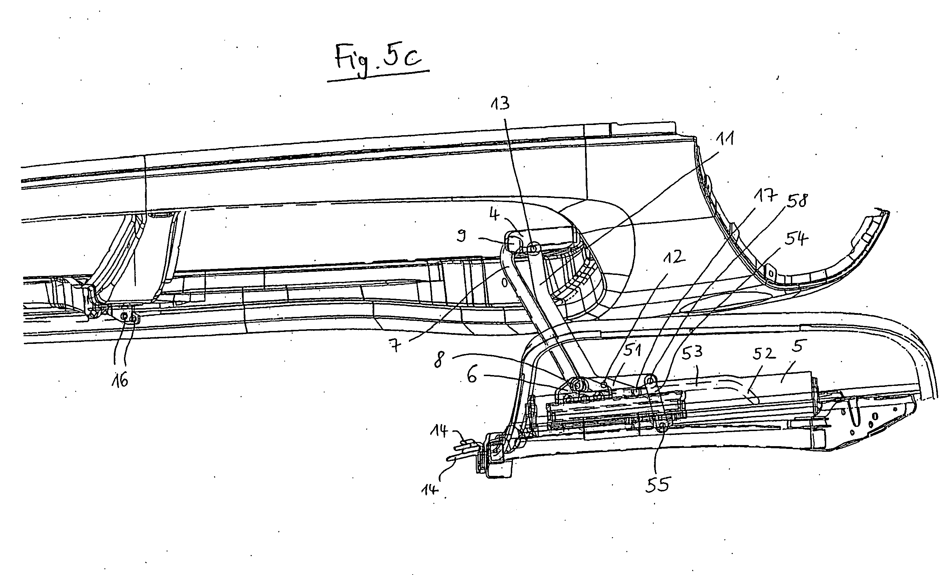

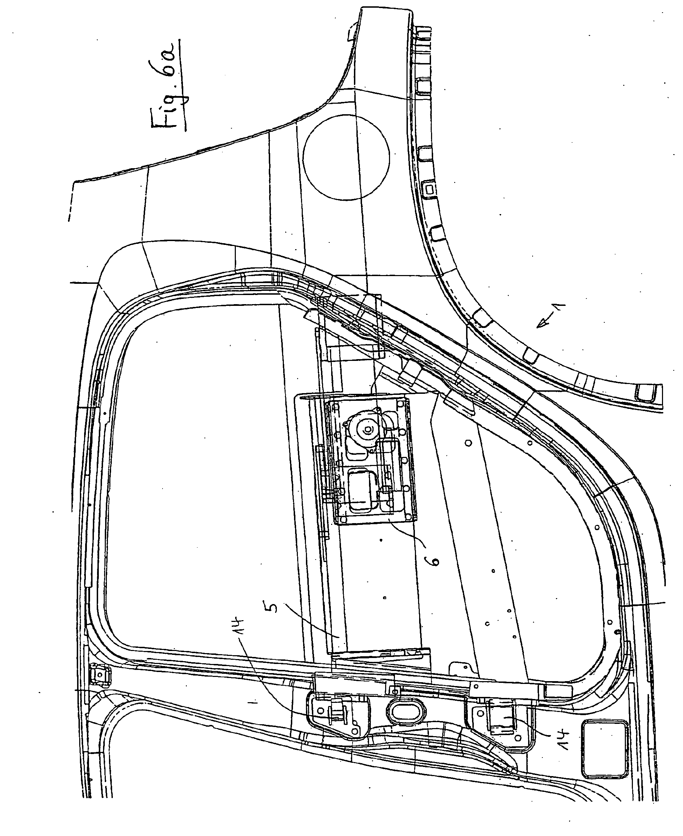

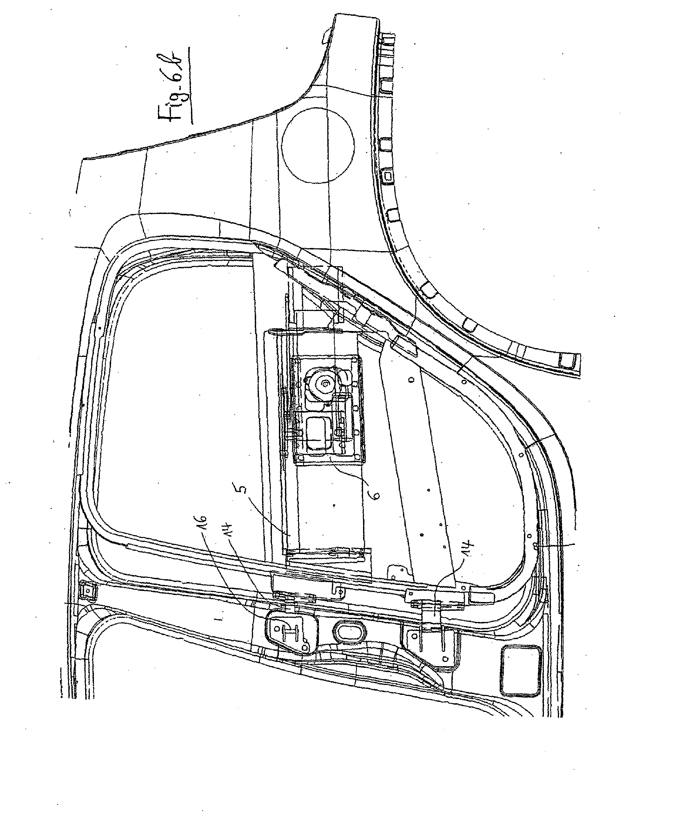

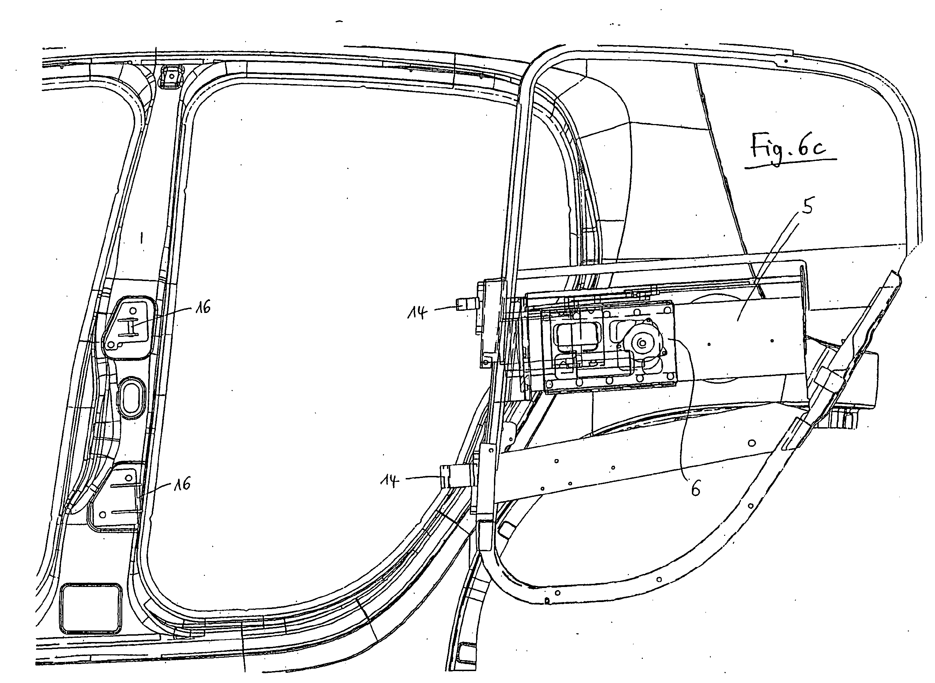

In Fig. 1a, 2a, 3a, 4a, 5a und 6a befindet sich die Schiebetüre 1 in der vollständig geschlossenen Stellung. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 auf, der an dem Gleitschlitten 6 um ein Gelenk 8 drehbar gelagert ist und der an dem Karosserieflansch 4 um ein Gelenk 9 drehbar gelagert ist. An dem Gleitschlitten 6 ist ein Zwischenhebel 10 drehbar gelagert, und zwar um die Achse des Gelenks 8, um die auch der Gleitschlitten 6 an dem Scharnierbügel 7 drehbar gelagert ist. Die Schiebetüre 1 umfaßt ferner einen Steuerhebel 11, der an dem Zwischenhebel 10 um ein Gelenk 12 drehbar gelagert ist und der an dem Karosserieflansch 4 um ein Gelenk 13 drehbar gelagert ist. Der Scharnierbügel 7, der Steuerhebel 11, der Zwischenhebel 10 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Scharnierkulisse 14 vorgesehen, die im wesentlichen parallel zur Fahrzeug-Längsrichtung verläuft. Sie ist an ihrem dem Scharnierbügel 7 abgewandten, im Ausführungsbeispiel also vorderen Ende offen. An einem Karosserieflansch 15, der an der B-Säule 2 befestigt ist, ist ein Scharnierbolzen 16 vorgesehen, der in die U-förmige Scharnierkulisse 14 eingreift. Durch die U-förmige Scharnierkulisse 14 und den Scharnierbolzen 16 ist die Schiebetüre 1 in ihrer geschlossenen Stellung an ihrem dem Scharnierbügel 7 abgewandten Ende drehbar und längsverschieblich gelagert.

Der Zwischenhebel 10 weist eine Verlängerung 51 auf, die sich von dem Gelenk 12 nach hinten erstreckt. Die Verlängerung 51 verlängert den Zwischenhebel 10 längs der Verbindungslinie von dem Gelenk 8 zu dem Gelenk 12 über das Gelenk 12 hinaus.

An dem Zwischenhebel 10 ist im Bereich des hinteren Endes der Verlängerung 51 ein Führungsstift 17 vorgesehen. In der geschlossenen Stellung der Schiebetüre 1 befindet sich das Gelenk 12 im Abstand nach außen und hinten von dem Gelenk 8, wobei die Verbindungslinie von dem Gelenk 8 zu dem Gelenk 12 in einem Winkel zur Fahrzeug-Längsachse verläuft. Der Winkel beträgt etwa 60°; andere Winkel sind möglich. Das Gelenk 13 befindet sich ebenfalls im Abstand in einer Richtung nach außen und hinten von dem Gelenk 9, wobei die Verbindungslinie von dem Gelenk 9 zu dem Gelenk 13 ebenfalls in einem Winkel zur Fahrzeug-Längsachse verläuft. Der Winkel beträgt etwa 60°; andere Winkel sind möglich. Der Abstand des Führungsstifts 17 von dem Gelenk 12 ist etwa doppelt so groß wie der Abstand des Gelenks 12 von dem Gelenk 8.

Der Führungsstift 17 ist in einer Führungsbahn 19 geführt. Die Führungsbahn 19 ist an der Schiebetüre 1 vorgesehen. Dementsprechend ist die Führungsbahn 19 also eine türfeste Führungsbahn. Sie weist einen ersten Abschnitt 52 auf, der von außen nach innen und von hinten nach vorne in einem Winkel zur Fahrzeug-Längsachse verläuft, und einen zweiten Abschnitt, der in einem Bogen an das innere, vordere Ende des ersten Abschnitts 52 anschließt und der im wesentlichen von hinten nach vorne verläuft. Der Winkel beträgt etwa 60°; andere Winkel sind möglich. Der zweite Abschnitt 53 verläuft im wesentlichen parallel zur Führungsschiene 5.

An der Führungsschiene 5 ist eine Antriebstange 54 um eine Gelenk 55 drehbar gelagert. Das Gelenk 55 ist an einem Vorsprung 56 vorgesehen, der von der Führungsschiene 5 nach außen ragt.

Der Steuerhebel 11 weist einen Hebelarm 57 auf, der von dem Gelenk 12 nach außen verläuft. Der Steuerhebel 11 weist im Bereich des äußeren Endes des Hebelarms 57 ein Gelenk 58 auf, an dem das hintere Ende der Antriebstange 54 drehbar gelagert ist. Der Hebelarm 57 bildet mit der Linie von dem Gelenk 13 zu dem Gelenk 12 einen Winkel. Der Winkel beträgt etwa 135°; andere Winkel sind möglich. Die Länge des Hebelarms 57, also der Abstand der Gelenke 12 und 58, ist etwa genauso groß wie die Länge der Antriebstange 54, also der Abstand der Gelenke 55 und 58.

In der vollständig geschlossenen Stellung der Schiebetüre 1, die in Fig. 1a, 2a und 3a gezeigt ist, liegt der Scharnierbolzen 16 in der U-förmigen Scharnierkulisse 14, und zwar im Bereich von deren Ende. Der Führungsstift 17 befindet sich im Bereich des äußeren, geschlossenen Endes des ersten Abschnitts 52 der Führungsbahn 19. Die Antriebstange 54 weist, ausgehend von dem Gelenk 55, im wesentlichen nach hinten. Der Hebelarm 57 verläuft, ausgehend von dem Gelenk 58, schräg von außen nach innen und von vorne nach hinten.

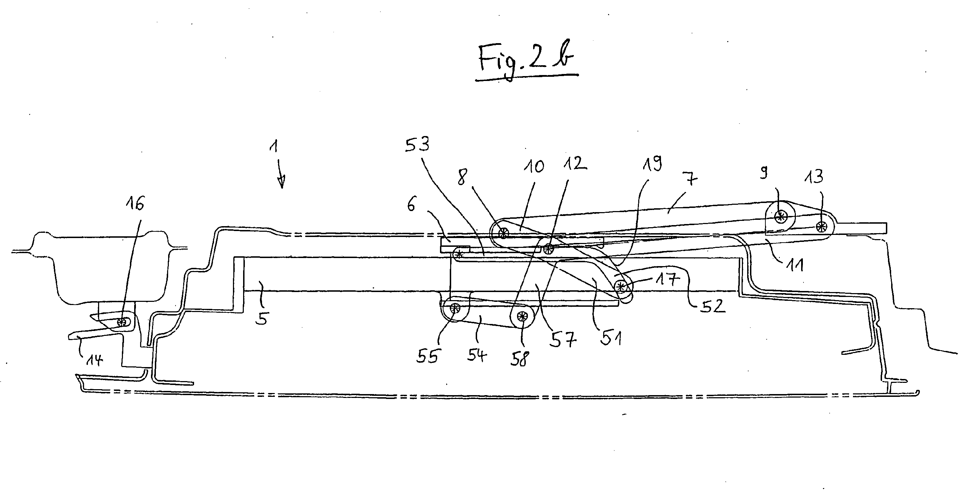

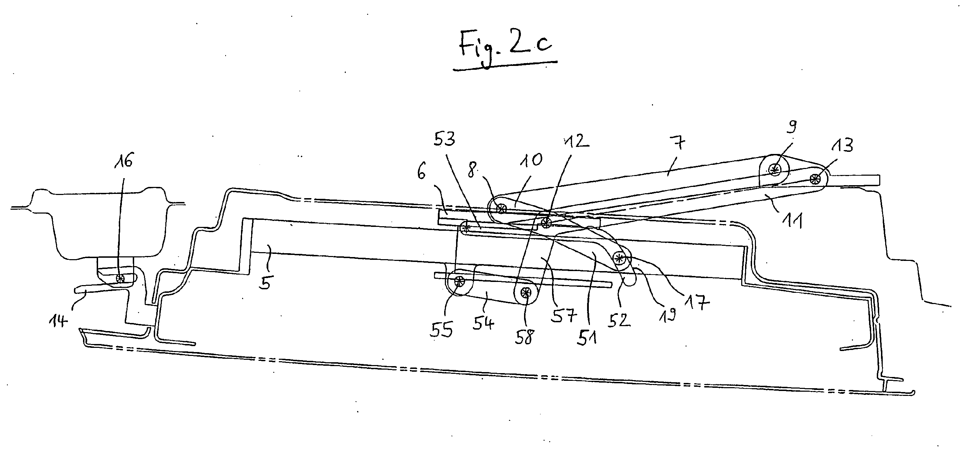

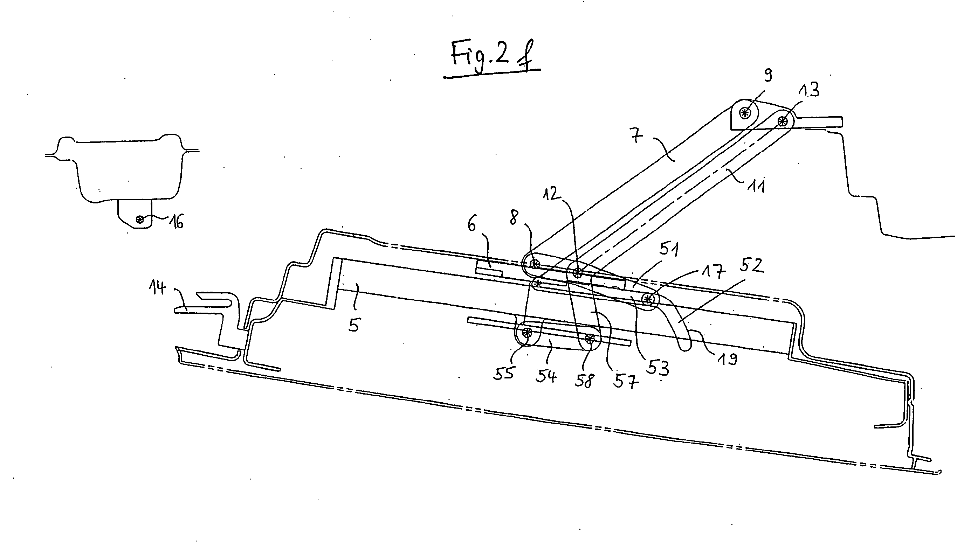

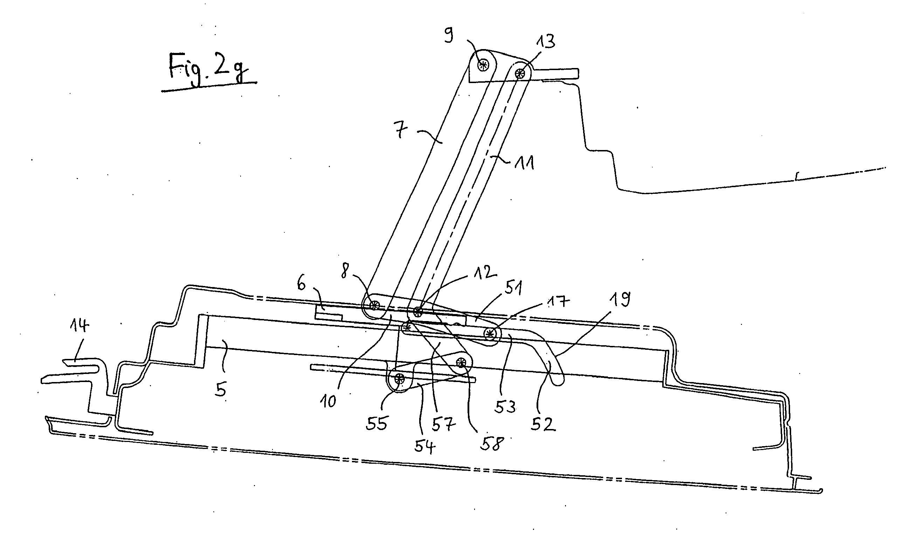

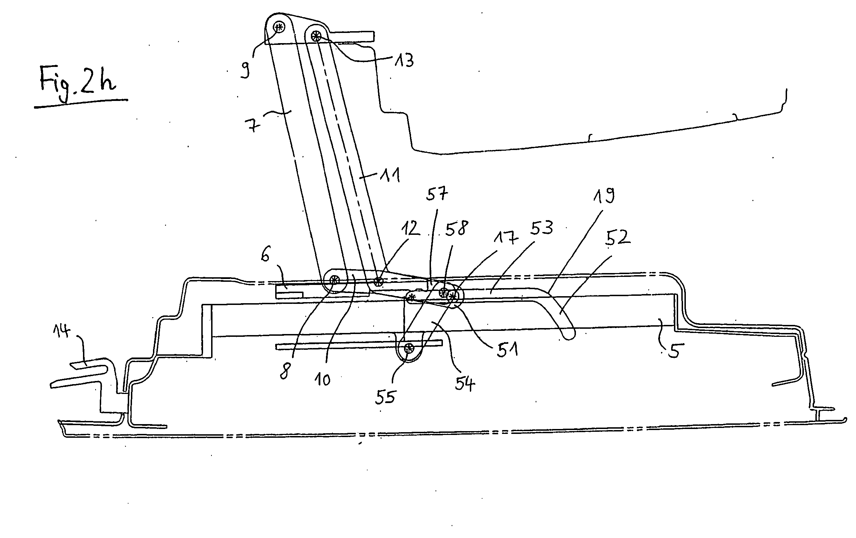

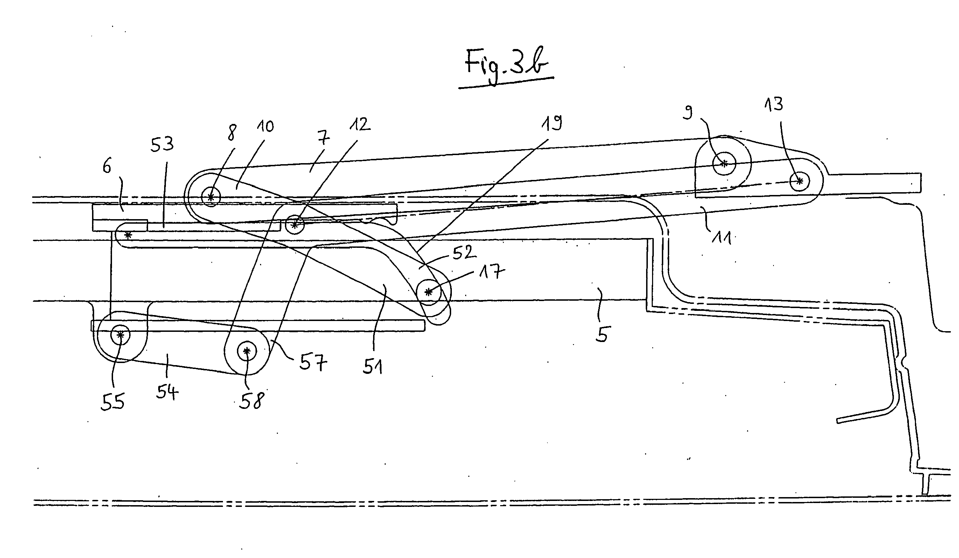

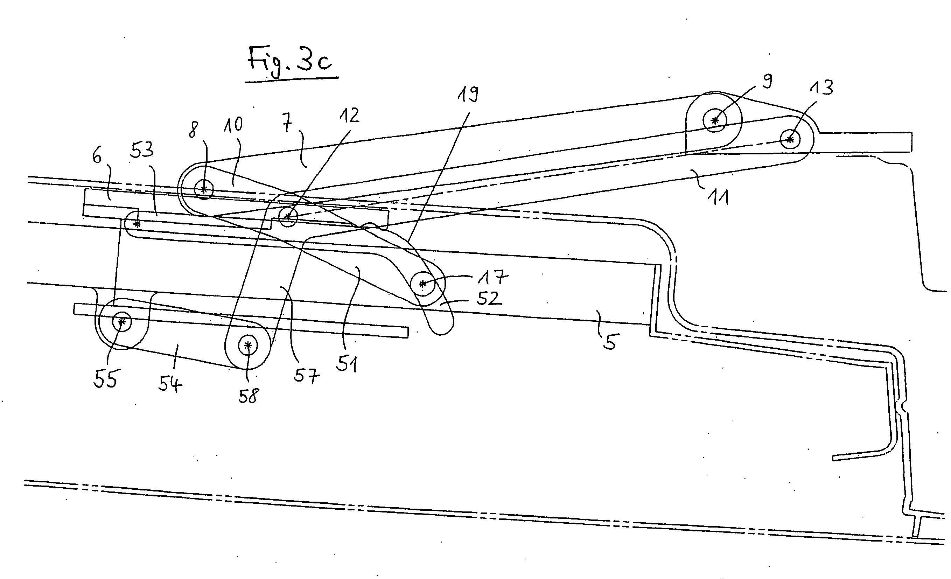

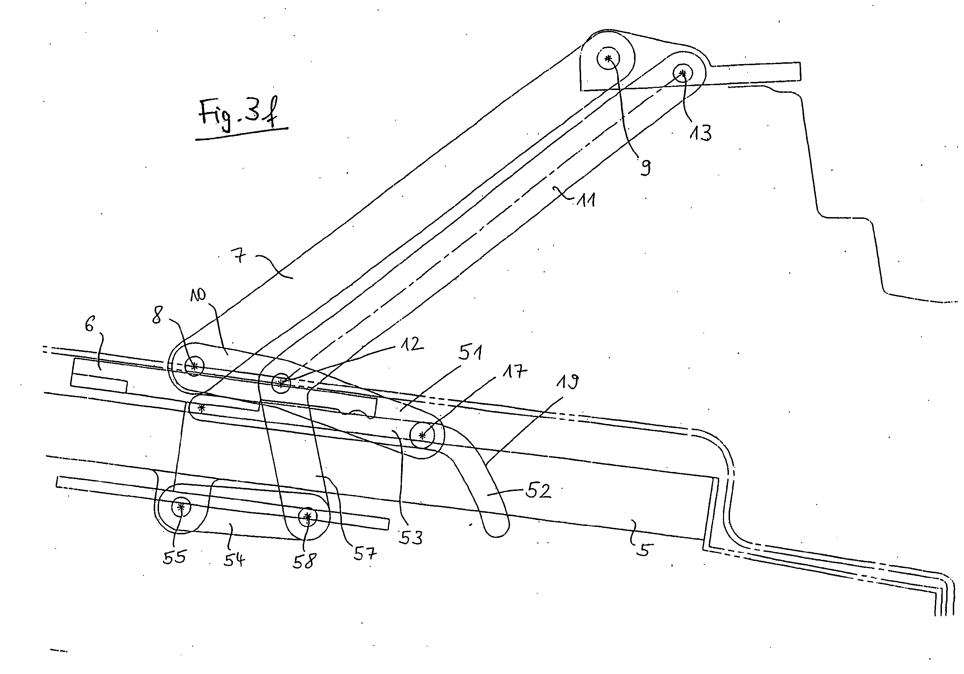

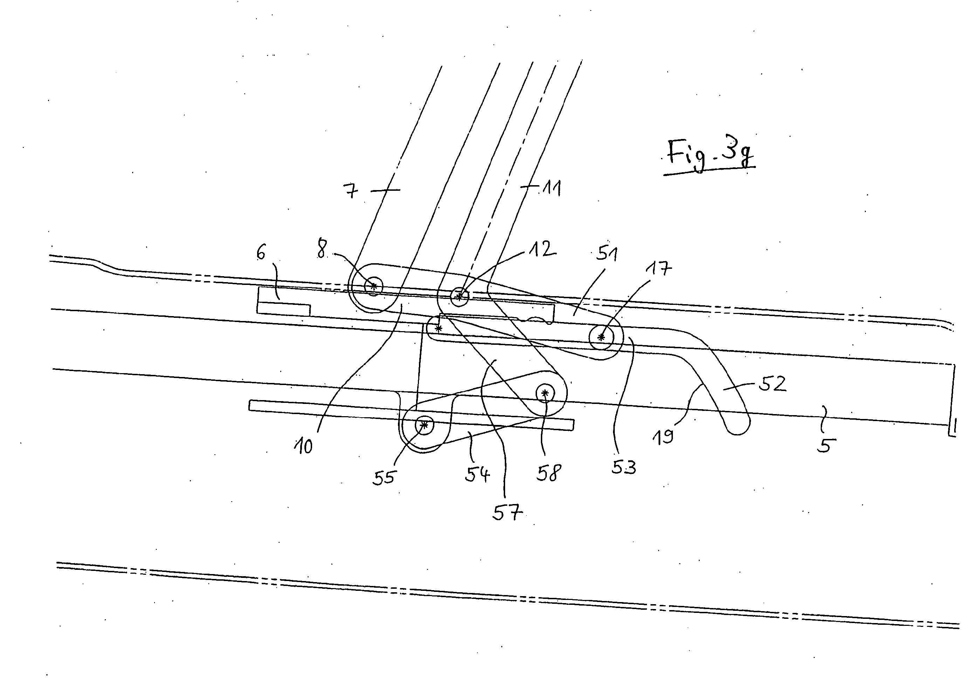

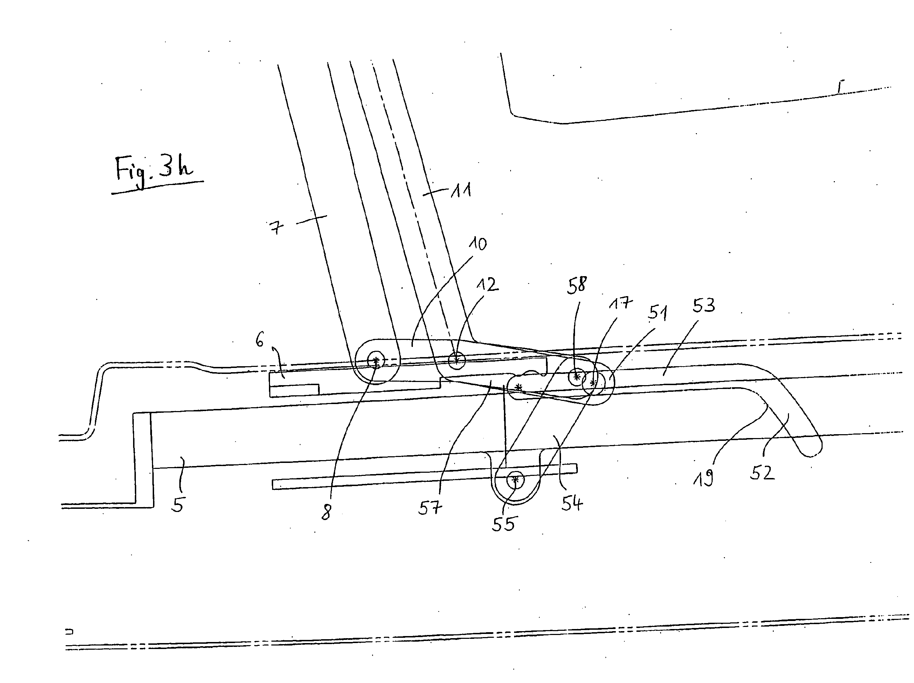

Im Verlauf der Öffnungsbewegung werden anschließend nacheinander die Stellungen nach Fig. 2b bis 2i bzw. die Stellungen nach Fig. 3b bis 3i durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Die Öffnungsbewegung kann allerdings auch von Hand erzeugt werden. Insbesondere kann die Führungsschiene 5 manuell nach hinten relativ zum Gleitschlitten 6 bewegt werden. Zu diesem Zweck kann an der Schiebetüre 1 ein Griff vorgesehen sein, durch den die Schiebetüre 1 und mit ihr die Führungsschiene 5 relativ zum Gleitschlitten 6 bewegt werden kann.

Wenn die Führungsschiene 5 relativ zum Gleitschlitten 6 nach hinten bewegt wird, bewegt sich auch das schienenfeste bzw. türfeste Gelenk 55 nach hinten. Hierdurch wird die Antriebsstange 54 ebenfalls nach hinten angetrieben. Dadurch wird das am anderen Ende der Antriebsstange 54 befindliche Gelenk 58 ebenfalls nach hinten bewegt, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Der Zwischenhebel 10 wird durch die Verschwenkung des Scharnierbügels 7 um das Gelenk 9 ebenfalls zwangsgeführt, da er mit dem Scharnierbügel 7, dem Steuerhebel 11 und dem Karosserieflansch 4 - wie ausgeführt - ein Mehrgelenk bildet.

Durch die Öffnungsbewegung wird die Scharnierkulisse 14 um den Scharnierbolzen 16 gedreht. Der Gleitschlitten 6 ist während dieser Bewegung ebenfalls zwangsgeführt. Eine Verschwenkung des Gleitschlittens 6 wird durch die Führung der Scharnierkulisse 14 in dem Scharnierbolzen 16 verhindert. Die Richtung der U-förmigen Scharnierkulisse 14 verläuft im wesentlichen von dem Gleitschlitten 6 weg, so daß eine Drehung des Gleitschlittens 6 um das Gelenk 8 wirkungsvoll verhindert wird. Im weiteren Verlauf der Öffnung der Schiebetüre 1 wird die Führungsbahn 5 weiter, motorisch oder manuell, relativ zum Gleitschlitten 6 nach hinten bewegt. Der Scharnierbolzen 16 bewegt sich von dem Ende der U-förmigen Scharnierkulisse 14 weg. Der Führungsstift 17 bewegt sich in dem ersten Abschnitt 52 der Führungsbahn 19 nach innen. Der Hebelarm 57 wird weiter, angetrieben durch die Antriebsstange 54, entgegen dem Uhrzeigersinn um das Gelenk 12 verschwenkt. Hierdurch werden der Steuerhebel 11 und der Scharnierbügel 7 weiter entgegen dem Uhrzeigersinn um die Gelenke 13 und 9 verschwenkt.

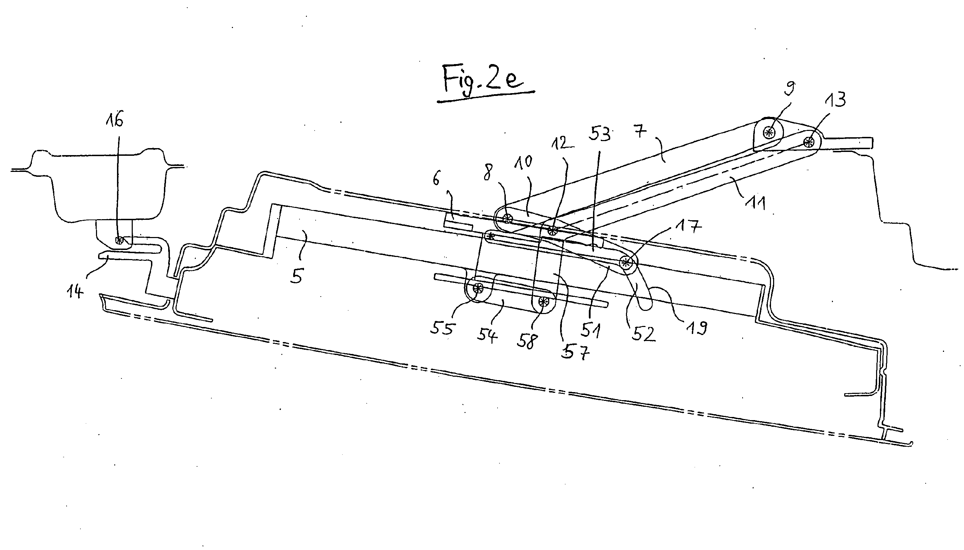

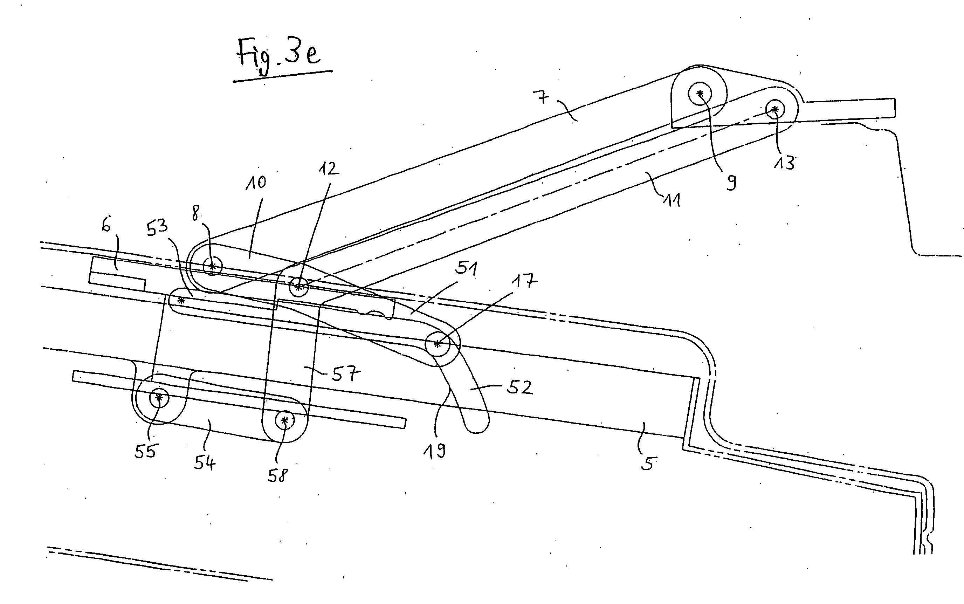

Bei der weiteren Öffnung der Schiebetüre 1 wird die Stellung gemäß Fig. 2e und 3e erreicht. Der Scharnierbolzen 16 befindet sich am Ende der U-förmigen Scharnierkulisse 14. Der Führungsstift 17 erreicht das innere Ende des ersten Abschnitts 52 der Führungsbahn 19.

In der Stellung gemäß Fig. 2e und 3e wird der Scharnierbolzen 16 von der U-förmigen Scharnierkulisse 14 freigegeben. Ferner gelangt der Führungsstift 17 von dem inneren Ende des ersten Abschnitts 52 der Führungsbahn 19 zu dem hinteren Ende des zweiten Abschnitts 53 der Führungsbahn 19. Die bis dahin wirksame Zwangsführung durch den Scharnierbolzen 16 in der U-förmigen Scharnierkulisse 14 endet mit Erreichen der Stellung gemäß Fig. 2e und 3e. Ab der Stellung gemäß Fig. 2e und 3e wird bei der weiteren Öffnungsbewegung der Schiebetüre 1 die Zwangsführung wirksam, die durch den zweiten Abschnitt 53 der Führungsbahn 19 vermittelt wird. Durch die Führung des Führungsstifts 17 in dem zweiten Abschnitt 53 der Führungsbahn 19 wird eine Verschwenkung des Gleitschlittens 6 um das Gelenk 8 verhindert. Auf diese Weise wird die bis dahin mögliche Drehbewegung des Gleitschlittens 6 um das Gelenk 8 relativ zu dem Zwischenhebel 10 verhindert. Der Gleitschlitten 6 folgt im Laufe der weiteren Öffnungsbewegung dem Zwischenhebel 10, der Bestandteil des Mehrgelenks ist, das aus dem Scharnierbügel 7, dem Steuerhebel 11, dem Zwischenhebel 10 und dem Karosserieflansch 4 besteht.

Der zweite Abschnitt 53 der Führungsbahn kann, wie in den Zeichnungen dargestellt, geradlinig und parallel zu der Führungsschiene 5 verlaufen. Dann findet, wie erläutert, keine relative Drehbewegung zwischen dem Gleitschlitten 6 und dem Zwischenhebel 10 um das Gelenk 8 statt. Es ist allerdings auch möglich, den zweiten Abschnitt 53 der Führungsbahn 19 auf andere Weise auszugestalten, um eine definierte Verschwenkung des Gleitschlittens 6 um das Gelenk 8 relativ zum Zwischenhebel 10 zu erreichen.

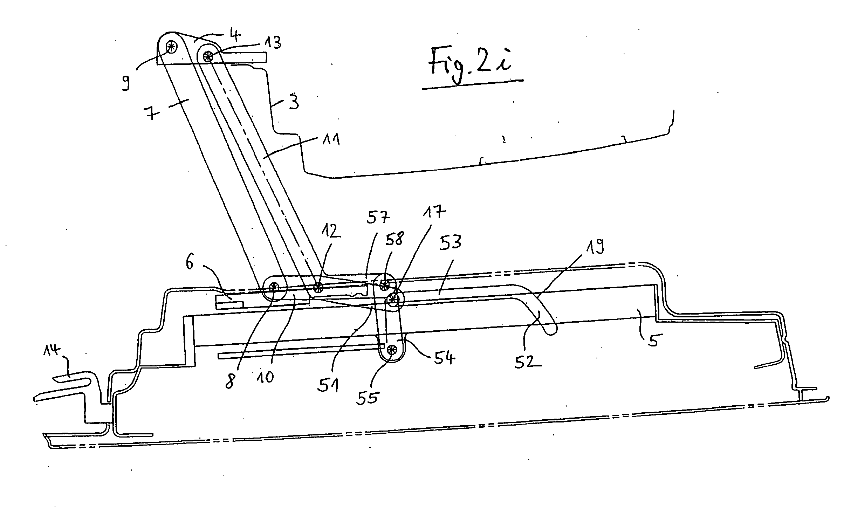

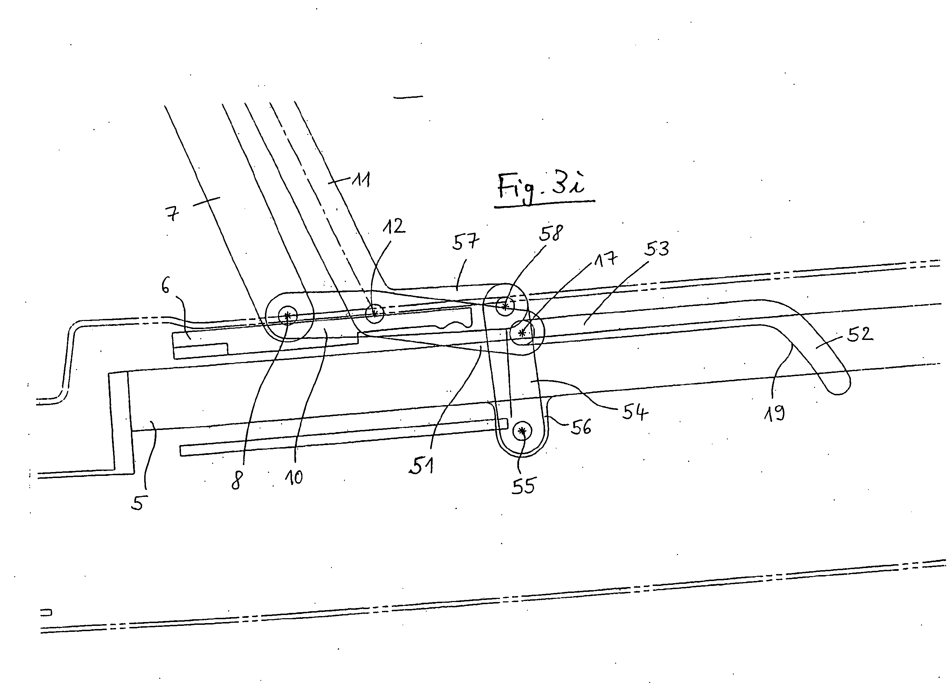

Die vollständig geöffnete Stellung der Schiebetüre 1 ist in Fig. 2i und 3i dargestellt. Die Antriebstange 54 wurde um das Gelenk 55 um etwa 90° entgegen dem Uhrzeigersinn verschwenkt. Der Führungsstift 17 hat das vordere, geschlossene Ende des zweiten Abschnitts 53 der Führungsbahn 19 erreicht. Der Steuerhebel 11 und der Scharnierbügel 7 wurden um einen Winkel von 120° entgegen dem Uhrzeigersinn um die Gelenke 13 und 9 verschwenkt.

Wenn die Schiebetüre 1 geschlossen werden soll, werden, ausgehend von der vollständig geöffneten Stellung gemäß Fig. 2i und 3i, die beschriebenen Stellungen in umgekehrter Reihenfolge durchlaufen. Die Schließbewegung der Schiebetüre 1 kann dadurch bewirkt werden, daß die Führungsschiene 5 motorisch oder manuell relativ zum Gleitschlitten 6 nach vorne bewegt wird. Die Relativbewegung der Führungsschiene 5 wird durch das Gelenk 55 und die Antriebstange 54 über den Hebelarm 57 in das beschriebene Mehrgelenk eingeleitet.

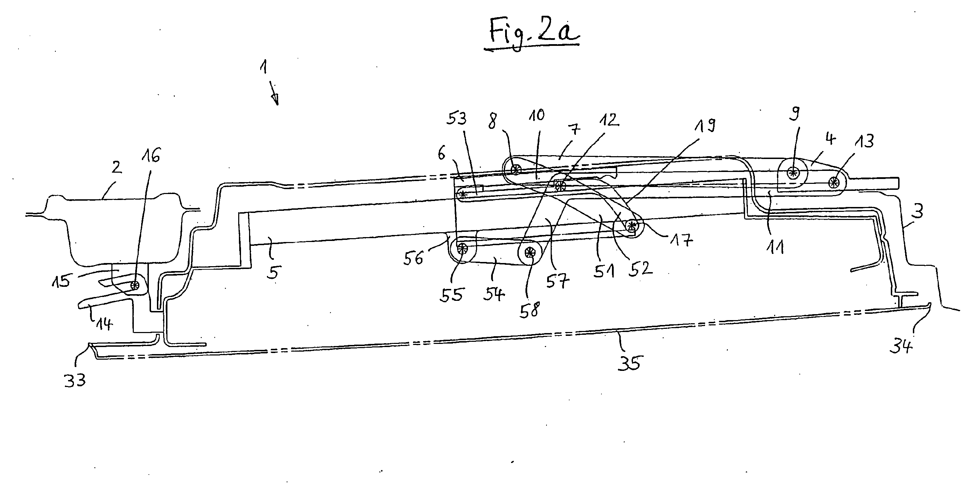

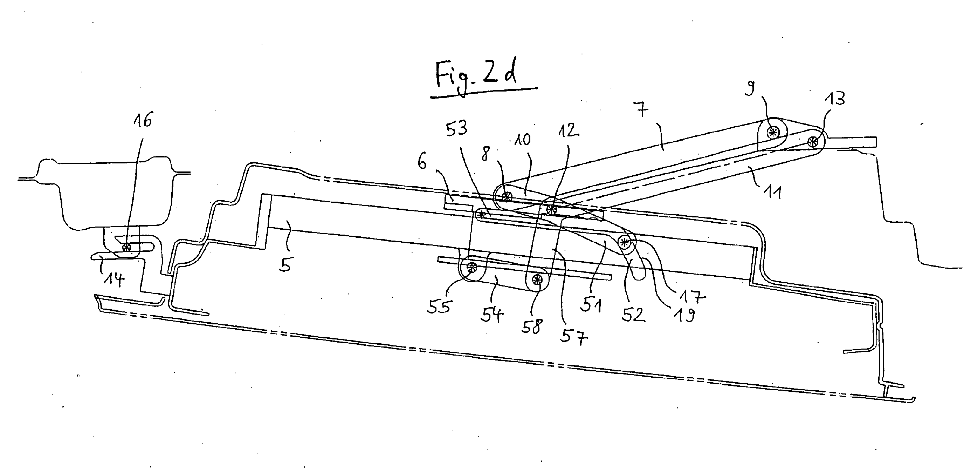

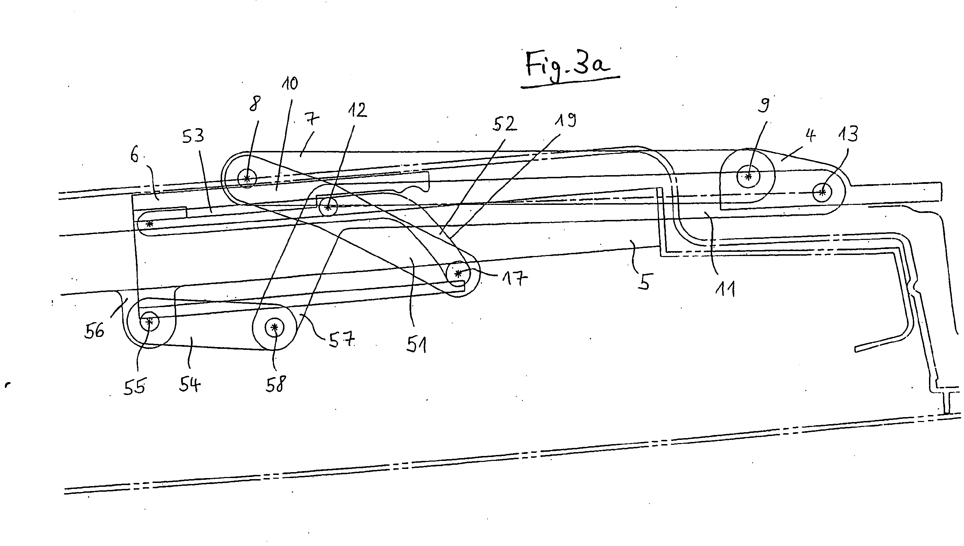

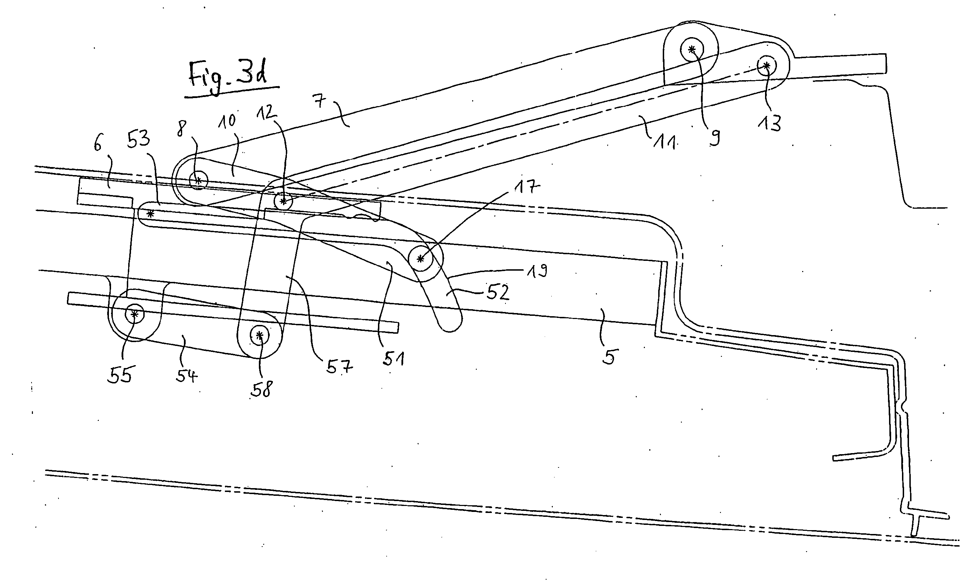

In der Stellung gemäß Fig. 2e und 3e, in der der Führungsstift 17 das hintere Ende des zweiten Abschnitts 53 der Führungsbahn 19 verläßt, tritt der Scharnierbolzen 16 in die U-förmige Scharnierkulisse 14 ein, und tritt der Führungsstift 17 in das innere Ende der Führungsbahn 19 ein. In der Stellung gemäß Fig. 2e und 3e wird die Zwangsführung durch die Führung des Führungsstifts 17 im zweiten Abschnitt 53 der Führungsbahn 19 beendet und wieder an die Zwangsführung durch den Scharnierbolzen 16 in der Scharnierkulisse 14 übergeben. Im weiteren Verlauf der Schließbewegung werden die Stellungen der Figuren 2d bis 2b bzw. der Figuren 3d bis 3b durchlaufen, bis schließlich die vollkommen geschlossene Stellung der Fig. 2a und 3a erreicht wird. Während dieser Bewegung ist die Schiebetüre 1 durch das beschriebene Mehrgelenk, den Hebelarm 57 und die Antriebstange 54 sowie durch den Scharnierbolzen 16 und die Scharnierkulisse 14 vollständig zwangsgeführt. Der erste Abschnitt 52 der Führungsbahn 19 ist derart ausgestaltet, daß er dem durch diese Zwangsführung erzeugten Weg des Führungsstifts 17 folgt.

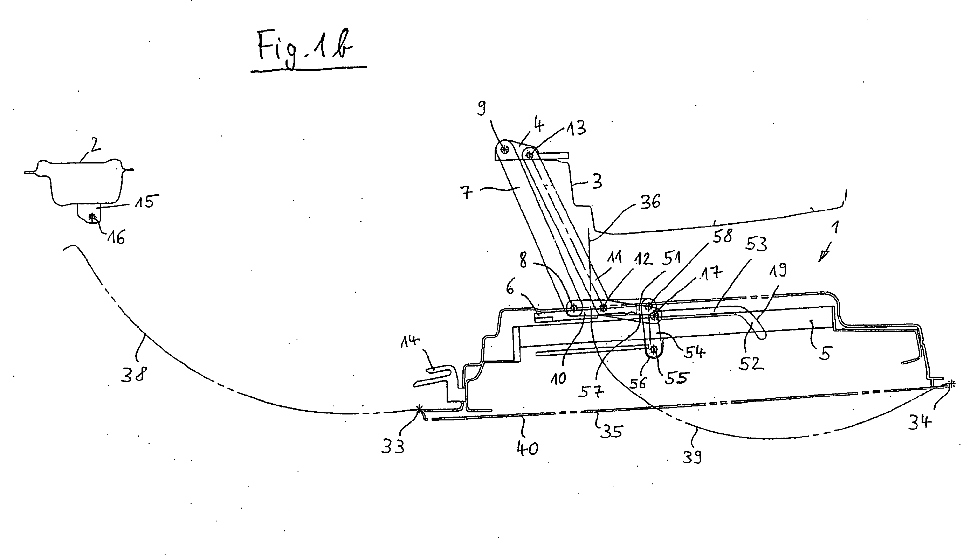

In Fig. 1a und 1b sind die Wege des vorderen Endes 33 und des hinteren Endes 34 des äußeren Türblechs 35 eingezeichnet. Während des ersten Teils der Öffnungsbewegung, in dem die Schiebetüre 1 im wesentlichen um den Scharnierbolzen 16 verschwenkt wird, bewegt sich das vordere Ende 33 überhaupt nicht oder nur geringfügig, und das hintere Ende 34 wird im wesentlichen rechtwinkelig von der Karosserie nach außen weg bewegt, wie durch die Linie 36 dargestellt.

Beim zweiten Teil der Öffnungsbewegung der Schiebetüre 1 bewegt sich das vordere Ende 33 des äußeren Türblechs 35 längs einer im wesentlichen bogenförmigen Linie 38, die einen verhältnismäßig großen Radius hat. Das hintere Ende 34 bewegt sich längs der bogenförmigen Linie 39 mit einem kleineren Radius. Am Ende des zweiten Teils der Öffnungsbewegung nimmt das äußere Türblech 35 die Stellung der mit 40 bezeichneten Linie ein.

Durch die Erfindung wird es ermöglicht, die Schiebetüre durch die Einleitung einer einzigen Bewegung zu öffnen und zu schließen. Insbesondere kann die Schiebetüre durch eine Bewegung der Führungsschiene 5 relativ zu dem Gleitschlitten 6 geöffnet und geschlossen werden. Die Bewegung der Führungsschiene 5 kann durch die Antriebstange 54 eingeleitet werden. Es ist allerdings auch möglich, den Scharnierbügel 7 um das Gelenk 9 motorisch oder manuell zu drehen und auf diese Weise die Bewegung in die Schiebetüre einzuleiten. Ferner ist es möglich, einen anderen Bestandteil des beschriebenen Mehrgelenks motorisch oder manuell anzutreiben.

Bei anderen vorbekannten Lösungen ist es erforderlich, zwei Bewegungen in die Schiebetüre 1 einzuleiten, nämlich zum einen eine Verschwenkung des Mehrgelenks, das aus dem Scharnierbügel 7, dem Steuerhebel 11, dem Karosserieflansch 4 und dem Zwischenhebel 10 besteht, und zum anderen eine Relativbewegung der Führungsschiene 5 zu dem Gleitschlitten 6. Gemäß der Erfindung ist es ausreichend, lediglich die Führungsschiene 5 relativ zu dem Gleitschlitten 6 zu bewegen oder lediglich einen Bestandteil des beschriebenen Mehrgelenks zu bewegen. Die jeweilige Bewegung kann motorisch oder manuell erzeugt werden. Insbesondere ermöglicht die Erfindung eine einfache manuelle Betätigung der Schiebetüre. Dies ist insbesondere auch dann möglich, wenn ein vorhandener Motor aufgrund eines Defekts ausfällt. Die Schiebetüre 1 kann also auch durch eine Notentriegelung geöffnet werden.

## Patentansprüche

1. Schiebetüre für ein Fahrzeug mit
einer Führungsschiene (5),
einem Gleitschlitten (6), der an der Führungsschiene (5) längsverschieblich gelagert ist,
und einem Scharnierbügel (7), der an dem Gleitschlitten (6) und an einem Karosserieflansch (4) drehbar (8, 9) gelagert ist,
**gekennzeichnet durch**
einen Zwischenhebel (10), der an dem Gleitschlitten (6) drehbar (8) gelagert ist,
einen Steuerhebel (11), der an dem Zwischenhebel (10) und an einem Karosserieflansch (4) drehbar (12, 13) gelagert ist,
und eine Antriebstange (54), die an dem Steuerhebel (11) drehbar (58) gelagert ist.

2. Schiebetüre nach Anspruch 1, **dadurch gekennzeichnet, daß** die Schiebetüre (1) an dem dem Scharnierbügel (7) abgewandten Ende drehbar und längsverschieblich gelagert (14, 16) ist.

3. Schiebetüre nach Anspruch 1 oder 2, **dadurch gekennzeichnet, daß** die Antriebstange (54) an der Führungsschiene (5) drehbar (55) gelagert ist.

4. Schiebetüre nach einem der vorhergehenden Ansprüche, **dadurch gekennzeichnet, daß** der Steuerhebel (11) einen Hebelarm (57) aufweist, an dem die Antriebstange (54) drehbar (58) gelagert ist.

5. Schiebetüre nach einem der vorhergehenden Ansprüche, **dadurch gekennzeichnet, daß** an dem Zwischenhebel (10) ein Führungsstift (17) vorgesehen ist, der in einer an der Schiebetüre (1) vorgesehenen Führungsbahn (19) geführt ist.

## Claims

1. Sliding door for a vehicle, comprising a guide rail (5), a sliding carriage (6) which is mounted longitudinally displaceably on the guide rail (5), and a hinge strap (7) which is mounted rotatably (8, 9) on the sliding carriage (6) and on a bodywork flange (4), **characterized by** an intermediate lever (10) which is mounted rotatably (8) on the sliding carriage (6), a control lever (11) which is mounted rotatably (12, 13) on the intermediate lever (10) and on a bodywork flange (4), and a drive rod (54) which is mounted rotatably (58) on the control lever (11).

2. Sliding door according to Claim 1, **characterized in that** the sliding door (1) is mounted rotatably and longitudinally displaceably (14, 16) at the end facing away from the hinge strap (7).

3. Sliding door according to Claim 1 or 2, **characterized in that** the drive rod (54) is mounted rotatably (55) on the guide rail (5).

4. Sliding door according to one of the preceding claims, **characterized in that** the control lever (11) has a lever arm (57) on which the drive rod (54) is mounted rotatably (58).

5. Sliding door according to one of the preceding claims, **characterized in that** a guide pin (17) is
provided on the intermediate lever (10) and is guided in a guide track (19) provided on the sliding door (1).

## Revendications

1. Porte coulissante pour un véhicule avec un rail de guidage (5),
un chariot coulissant (6) qui est logé d'une manière déplaçable longitudinalement au rail de guidage (5),
et un étrier de charnière (7) qui est logé au chariot coulissant (6) et à une bride de carrosserie (4) d'une manière tournante (8, 9),
**caractérisée par**
un levier intermédiaire (10) qui est logé d'une manière tournante (8) au chariot coulissant (6),
un levier de commande (11) qui est logé d'une manière tournante (12, 13) au levier intermédiaire (10) et à une bride de carrosserie (4),
et une tige d'entraînement (54) qui est logée d'une manière tournante (58) au levier de commande (11).

2. Porte coulissante selon la revendication 1, **caractérisée en ce que** la porte coulissante (1) est logée d'une manière tournante et déplaçable longitudinalement (14, 16) à l'extrémité éloignée de l'étrier de charnière (7).

3. Porte coulissante selon la revendication 1 ou 2, **caractérisée en ce que** la tige d'entraînement (54) est logée d'une manière tournante (55) au rail de guidage (5).

4. Porte coulissante selon l'une des revendications précédentes, **caractérisée en ce que** le levier de commande (11) présente un bras de levier (57) auquel est logé d'une manière tournante (58) la tige d'entraînement (54).

5. Porte coulissante selon l'une des revendications précédentes, **caractérisée en ce qu'**il est prévu au levier intermédiaire (10) un axe de guidage (17) qui est guidé dans une voie de guidage (19) prévue à la porte coulissante (1).
